# EUROPEAN PATENT APPLICATION

(11) **EP 4 819 449 A1**
(43) Date of publication of application: **07.10.2026**
(21) Application number: 24897455.2
(22) Date of filing: 22.11.2024
(51) Int. Cl.: H02K 3/30, H02K 15/10

(54) **THERMOSETTING RESIN COMPOSITION AND METHOD FOR MANUFACTURING STATOR**

(30) Priority: 01.12.2023 JP 2023203627
(71) Applicant: Sumitomo Bakelite Co.Ltd., Shinagawa-ku Tokyo 140-0002 (JP)
(72) Inventor: YOKAWA Akitaka, Tokyo 140-0002 (JP)
(74) Representative: Müller-Boré & Partner Patentanwälte PartG mbB
(86) International application number: PCT/JP2024/041404
(87) International publication number: WO 2025/115769

(57) **Abstract**

Provided is a thermosetting resin composition used for forming an insulating layer when filled into a space (88) formed between a mold core (80) (blade) inserted into an interior of a slot (8) of a stator (4) and a wall surface of the slot (8) (an inner wall surface (72) of a tooth part (7) and an inner wall surface (62) of a yoke part (6)). The thermosetting resin composition contains an epoxy resin, a curing agent, an inorganic filler, and a wax (release agent), in which the wax includes a higher fatty acid ester or a higher fatty acid amide, and a contained amount of the higher fatty acid ester or the higher fatty acid amide is 1.0% by mass or less with respect to the total amount of the thermosetting resin composition.

## Description

### TECHNICAL FIELD

The present invention relates to a thermosetting resin composition and a stator. More particularly, the present invention relates to a thermosetting resin composition for use as a sealing material of a stator core, and a stator containing the thermosetting resin composition as a sealing material.

### BACKGROUND ART

As a technology of using a resin material for a stator core, there is a technology disclosed in Patent Document 1 (Japanese Unexamined Patent Publication No. 2003-284277). The document discloses a rotating electric machine including a stator in which a plurality of coils are wound around a stator core formed by laminating a plurality of electromagnetic steel sheets at a predetermined interval, a rotor held rotatably with respect to this stator, and a cooling frame fixing the stator, in which a highly heat-conductive composite material with slots that are winding portions of a stator and are formed of a thermosetting resin having an anisotropic structure in the resin component, is disposed, and it is assumed that due to such a configuration, a rotating electric machine that easily transfers heat generated in the coils and has satisfactory heat dissipation properties is provided.

### RELATED DOCUMENT

### PATENT DOCUMENT

[Patent Document 1] Japanese Unexamined Patent Publication No. 2003-284277

### SUMMARY OF THE INVENTION

### TECHNICAL PROBLEM

Incidentally, a coil is inserted into a slot of a stator, and in order to ensure insulating properties between the coil and the slot, a resin layer may be formed on a wall surface of the slot before the coil is inserted. In a step of forming the resin layer, a mold core (also referred to as a blade) is disposed in the slot, a space formed by the slot wall surface and the mold core is filled with a resin composition, and after a certain period of time has elapsed, the mold core is pulled out. When the mold core is pulled out, problems such as distortion of the resin composition around the mold core may occur, a withdrawal speed cannot be increased, and there has been a need for a technique to address this problem from the viewpoint of productivity.

The present invention has been made in view of such circumstances, and an object of the present invention is to provide a technique for improving productivity in a case where a mold core is inserted into a slot and a resin layer is formed on a wall surface of the slot.

### SOLUTION TO PROBLEM

According to the present invention, the following technologies are provided.
<1> A thermosetting resin composition used for forming an insulating layer when filled into a space formed between a blade that is a mold core inserted into an interior of a slot of a stator, and a wall surface of the slot, the thermosetting resin composition containing:
   an epoxy resin;
   a curing agent;
   an inorganic filler; and
   a wax,
   in which the wax includes a higher fatty acid ester or a higher fatty acid amide, and a contained amount of the higher fatty acid ester or the higher fatty acid amide is 1.0% by mass or less with respect to a total amount of the thermosetting resin composition.
<2> A method for manufacturing a stator, in which an insulating layer is provided on a wall surface of a slot by using the thermosetting resin composition according to <1>, the method including:
   a core placement step of inserting a blade-shaped mold core into an interior of the slot and forming, between the wall surface of the slot and the mold core, a filling space to be filled with the thermosetting resin composition; and
   a resin filling step of filling the filling space with the thermosetting resin composition.
<3> The method for manufacturing a stator according to <2>,
   in which a surface roughness Ra of the mold core is 10 µm or less.
<4> The method for manufacturing a stator according to <2> or <3>,
   in which a surface of the mold core has a coating layer.
<5> The method for manufacturing a stator according to any one of <2> to <4>, further including, in a step after the resin filling step:
   a mold core removal step of pulling out and removing the mold core.
<6> The method for manufacturing a stator according to <5>,
   in which, in the mold core removal step, a withdrawal force F when removing the mold core is 250 kgf or less.
<7> The method for manufacturing a stator according to <6>,
   in which, in the mold core removal step, a ratio F/S of the withdrawal force F to a surface area S of the mold core is 3.6 kgf/cm² or less.
<8> The method for manufacturing a stator according to any one of <5> to <7>,
   in which the mold core removal step is performed in an as-molded state.
<9> The method for manufacturing a stator according to any one of <2> to <8>,
   in which a glass transition temperature Tg of a cured product of the thermosetting resin composition is 120°C or higher.

### ADVANTAGEOUS EFFECTS OF INVENTION

The present invention has been made in view of such circumstances, and it is possible to provide a technique for improving productivity in a case where a mold core is inserted into a slot and a resin layer is formed on a wall surface of the slot.

### BRIEF DESCRIPTION OF THE DRAWINGS

Fig. 1 is a cross-sectional view in a direction perpendicular to a rotational axis direction of a motor.
Fig. 2 is a longitudinal cross-sectional view in the rotational axis direction of the motor.
Fig. 3 is an enlarged view showing a periphery of a slot.
Fig. 4 is a cross-sectional view showing an interior of the slot.
Fig. 5 is a flowchart showing a method for manufacturing a stator.
Fig. 6 is a view showing a transition of a state inside the slot in a resin layer forming step.
Fig. 7 is a view showing a transition of a state inside the slot in a resin layer forming step.
Fig. 8 is a view showing a slot of a stator simulation mold of Example.
Fig. 9 is a view showing a mold core of Example.

### DESCRIPTION OF EMBODIMENTS

Hereinafter, embodiments of the present invention will be described with reference to the drawings. In all drawings, similar constituent elements will be assigned with similar reference numerals, and description thereof will not be repeated. In the present specification, the description "a to b" in a numerical range indicates "equal to or greater than a and equal to or less than b".

### <Outline>

In the present embodiment, a technique for improving productivity in a case where a mold core is inserted into a slot of a stator and a resin layer is formed on a wall surface of the slot is provided. For the purpose, a wax (release agent) is contained in a thermosetting resin composition used for forming the resin layer. The wax includes a higher fatty acid ester or a higher fatty acid amide, and a contained amount of the higher fatty acid ester or the higher fatty acid amide is set to 1.0% by mass or less with respect to the total amount of the thermosetting resin composition. In addition, a surface of a blade-shaped mold core used for forming the resin layer is configured to have favorable withdrawal property from the thermosetting resin composition. The description will be given below in more detail.

Note that the stator according to the present embodiment is applied to, for example, an electric motor (motor) as a rotating electric machine (an electric motor, a generator, or a dual-purpose machine of an electric motor/generator). The use application of a motor will be described below as an embodiment.

### <Motor>

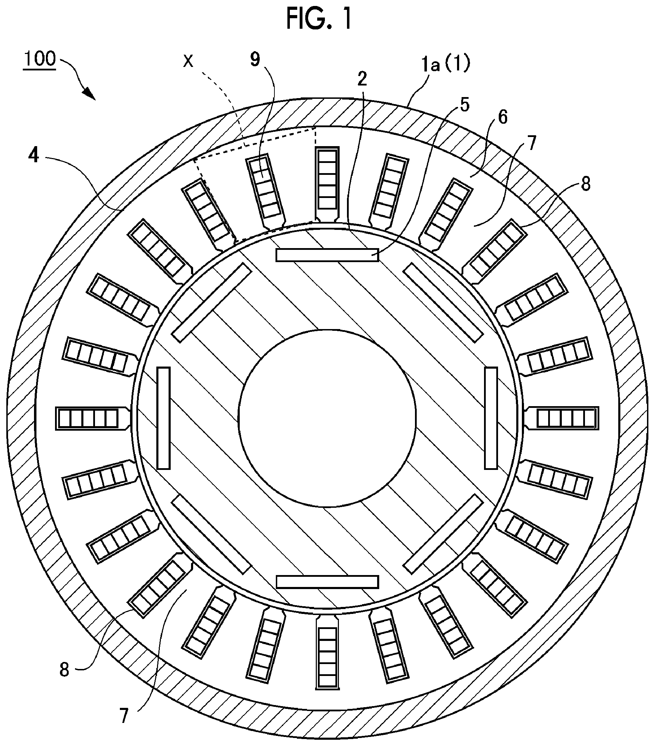

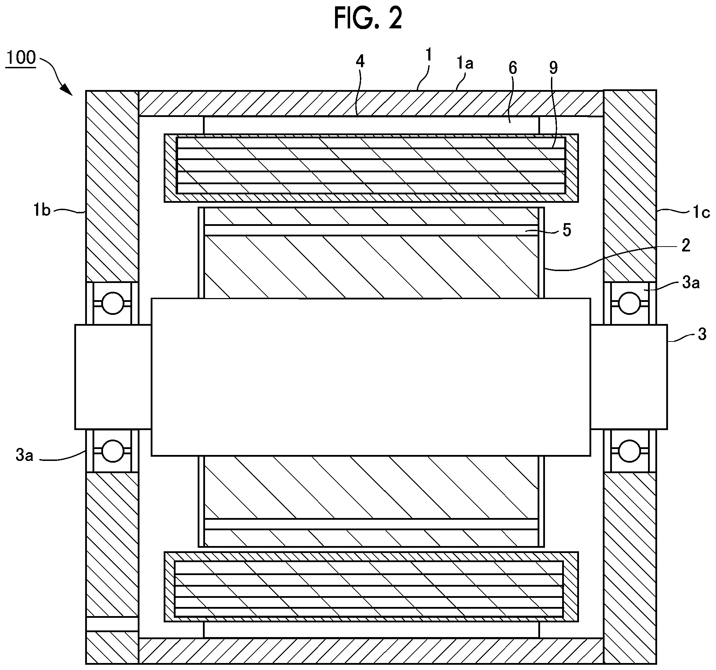

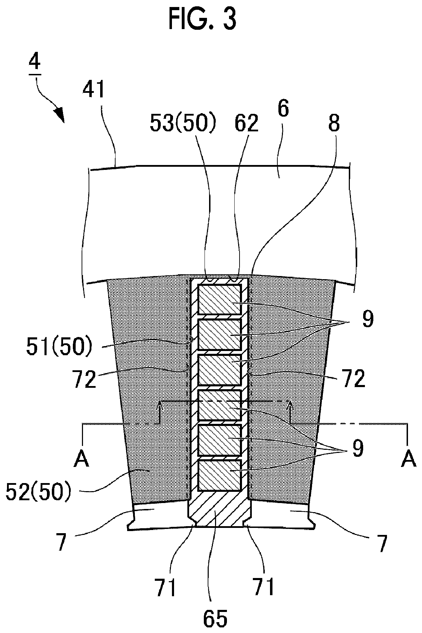

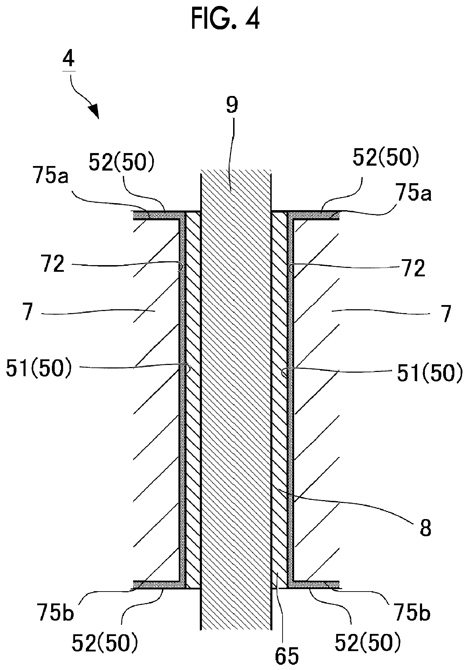

Fig. 1 schematically shows a cross-sectional view of a motor 100 in a direction perpendicular to a rotational axis direction. Fig. 2 schematically shows a cross-sectional view of the motor 100 in the rotational axis direction. Fig. 3 is an enlarged view showing the periphery of a slot (area X in Fig. 1) and schematically shows a cross-sectional view of a portion where a coil 9 protrudes from an end part of a slot 8. Fig. 4 is a view showing an interior of the slot 8, and is a cross-sectional view taken along a line A-A of Fig. 3.

A motor 100 includes a case 1, and a rotor 2, a stator 4, and a coil 9 accommodated in the case 1.

### <Case>

The case 1 includes a cylindrical part 1a and side plate parts 1b and 1c that close two ends in an axial direction of the cylindrical part 1a. As a material of the case 1, for example, an aluminum alloy (casting product), a resin material, or a combination thereof can be used.

### <Rotor>

As shown in Figs. 1 and 2, the rotor 2 is accommodated inside the case 1. As shown in Fig. 2, a rotating shaft 3 is attached to a center of the rotor 2 as an output shaft. Both ends of the rotating shaft 3 are supported by the side plate parts 1b and 1c through bearings 3a. In this manner, the rotor 2 is freely rotatable about the rotating shaft 3.

Permanent magnets 5 are internally mounted in the rotor 2. Specifically, as shown in Fig. 1, a plurality of (here, eight) permanent magnets 5 are placed on the same circumference at equal intervals. In this case, the permanent magnets 5 are installed such that the magnetic poles of adjacent permanent magnets 5 are different from each other.

### <Stator>

The stator 4 has a stator core 41 and a coil 9 sealed in a slot 8.

A stator core 41 is provided by laminating and tightly fixing a plurality of electromagnetic steel sheets in the axial direction, and is provided with a yoke part 6 that is provided annularly as viewed from an end part in the axial direction as shown in Fig. 1, and with a plurality of tooth parts 7 extending from the yoke part 6 toward the rotor 2 side (inner peripheral side). The plurality of tooth parts 7 are provided by being arranged at equal intervals in the circumferential direction. Here, as shown in Fig. 1, twenty four tooth parts 7 are provided. The slot 8 is provided between each of the tooth parts 7. In addition, the tooth parts 7 are provided with a resin layer 50 that covers the tooth parts 7 in a small thickness by causing a resin composition to circle around the tooth parts 7.

### <Coil>

As an example, the coil 9 has a rectangular wire U-shape, and is wound so as to be accommodated in two slots 8 spaced apart from each other across the tooth part 7. The coil 9 may be accommodated by distributed winding in a liner member disposed in the slot 8, or may be accommodated without providing a liner member. The coil 9 has a coil main body made of a good conductor such as copper and having a rectangular cross section, and a resin cover layer covering the surface of the coil main body. As for the resin cover layer, the same material as that to be described later as the resin material for the resin layer 50 can be used.

### <Tooth part>

The tooth parts 7 are provided in correspondence with the permanent magnets 5 of the rotor 2 described above, and by sequentially exciting the coils 9, the rotor 2 rotates due to attraction and repulsion with the permanent magnets 5 in correspondence with this sequential exciting.

The tooth part 7 has a large width in the circumferential direction on the outer peripheral side and has a small width on the inner peripheral side. The tooth part is tapered toward the inner peripheral side. At the end part on the inner peripheral side of the tooth part 7, tooth part tips 71 are formed to face each other in the circumferential direction to reduce the width of the slot 8.

### <Slot>

The slot 8 is a space between the adjacent tooth parts 7, and is provided so that inner wall surfaces 72 of the tooth parts 7 facing in the radial direction are parallel surfaces as shown in Figs. 3 and 4. A space between the tooth part tips 71 forms an opening on the inner peripheral side of the slot 8. The slot 8 has a plurality of coils 9 disposed on an outer peripheral side (yoke part 6 side), the resin layer 50, and a resin sealing part 65 filled in a space excluding the coils 9 and the resin layer 50 in the slot 8.

### <Resin Layer>

As shown in Figs. 3 and 4, the resin layer 50 covers a peripheral edge of the tooth part 7 by being integrally wrapped around with a resin composition, and has a tooth inner surface resin layer 51 covering the inner wall surface 72 of the tooth part 7, a tooth outer surface resin layer 52 covering an upper surface 75a and a lower surface 75b of the tooth part 7, and a yoke inner surface resin layer 53 covering an inner wall surface 62 of the yoke part 6.

The resin layer 50 covers the tooth part 7 by wrapping around the tooth part 7 in a small thickness by insert molding to tightly fix the stator 4, more specifically, the plurality of magnetic steel sheets laminated in the tooth part 7. The resin layer 50 does not necessarily need to wrap around the tooth part 7 in a small-thickness shape, and the tooth outer surface resin layer 52 may be omitted. By having the tooth inner surface resin layer 51 and the yoke inner surface resin layer 53, insulation between the coil 9 and the inner wall surface of the slot 8 (the inner wall surface 72 of the tooth part 7 and the inner wall surface 62 of the yoke part 6) is ensured.

A thickness of the resin layer 50 is, for example, 50 µm or more and 500 µm or less. The lower limit value of the thickness is preferably 100 µm or more, and more preferably 150 µm or more. The upper limit value of the thickness is preferably 400 µm or less, and more preferably 300 µm or less. Thicknesses of the tooth inner surface resin layer 51, the tooth outer surface resin layer 52, and the yoke inner surface resin layer 53 may be the same as or different from each other.

The lower limit value of the thickness is preferably within the above-described range from the viewpoint of ensuring flowability of the resin composition in an extremely narrow portion between a mold (mold core 80) and the wall surface of the slot 8 with respect to a stator axial length (that is, the thickness of the stator 4) during insert molding.

The upper limit value of the thickness is preferably within the above range from the viewpoint of securing the performance such as magnetic flux density and the degree of freedom in size of the coil 9 which can be used due to the increase in space utilization efficiency in the slot 8 in the structure in which the coil 9 is wound on the tooth part 7 and placed in the slot 8.

### <Physical Properties of Resin Layer>

For example, the physical properties of a cured product of the resin material constituting the resin layer 50 are as follows.

The cured product of the resin material has a thermal conductivity of 0.5 W/(m·K) or more. The lower limit of the thermal conductivity is preferably 1.0 W/(m·K) or more, and more preferably 2 W/(m·K) or more. The upper limit of the thermal conductivity is not particularly limited, but is 10 W/(m·K) as an actual value.

A glass transition temperature Tg of the resin composition of the resin layer 50 is 120°C or higher, preferably 140°C or higher, and more preferably 160°C or higher. In a case where the glass transition temperature Tg is within the above range, the motor 100 can be used at high temperatures, and is resistant to the heat generated from the coil 9, so that the motor 100 can be used at high output.

The resin composition of the resin layer 50 will be specifically described below.

### <Material for Resin Layer>

The resin composition of the resin layer 50 preferably contains a thermosetting resin (A), a filler (B), a curing agent (C), and the like.

### [Thermosetting Resin (A)]

Examples of the thermosetting resin (A) include an epoxy resin, a cyanate resin, a polyimide resin, a benzoxazine resin, an unsaturated polyester resin, a phenol resin, a melamine resin, a silicone resin, a bismaleimide resin, a phenoxy resin, and an acrylic resin. As the thermosetting resin (A), one of the above kinds may be used alone, or two or more may be used in combination.

Among these, an epoxy resin, a phenol resin, and a phenoxy resin are preferable as the thermosetting resin (A) from the viewpoint of high insulating properties. An epoxy resin is particularly preferable from the viewpoint of securing the fluidity in an extremely narrow portion during molding.

Examples of the epoxy resin include bisphenol-type epoxy resins such as a bisphenol A-type epoxy resin, a bisphenol F-type epoxy resin, a bisphenol E-type epoxy resin, a bisphenol S-type epoxy resin, a bisphenol M-type epoxy resin (4,4'-(1,3-phenylenediisopridiene)bisphenol epoxy resin), a bisphenol P-type epoxy resin (4,4'-(1,4-phenylenediisopridiene)bisphenol epoxy resin), and a bisphenol Z-type epoxy resin (4,4'-cyclohexydiene bisphenol epoxy resin); novolac-type epoxy resins such as a phenol novolac-type epoxy resin, a cresol novolac-type epoxy resin, a trisphenol group methane-type novolac-type epoxy resin, a tetraphenol group ethane-type novolac-type epoxy resin, and a novolac-type epoxy resin having a condensed ring aromatic hydrocarbon structure; biphenyl-type epoxy resins; arylalkylene-type epoxy resins such as a xylylene-type epoxy resin and a biphenylaralkyl-type epoxy resin; naphthalene-type epoxy resins such as a naphthylene ether-type epoxy resin, a naphthol-type epoxy resin, a naphthalenediol-type epoxy resin, a bifunctional or tetrafunctional epoxy-type naphthalene resin, a binaphthyl-type epoxy resin, and a naphthalene aralkyl-type epoxy resin; anthracene-type epoxy resins; phenoxy-type epoxy resins; dicyclopentadiene-type epoxy resins; norbornene-type epoxy resins; adamantane-type epoxy resins; and fluorene-type epoxy resins. One of the above kinds may be used alone, or two or more may be used in combination.

Among the epoxy resins, one or two or more kinds selected from the group consisting of bisphenol-type epoxy resins, novolac-type epoxy resins, biphenyl-type epoxy resins, arylalkylene-type epoxy resins, naphthalene-type epoxy resins, anthracene-type epoxy resins, and dicyclopentadiene-type epoxy resins are preferable from the viewpoint of further improving the heat resistance and the insulation reliability.

Examples of the phenol resin include novolac-type phenol resins such as a phenol novolac resin, a cresol novolac resin, and a bisphenol A novolac resin, and resol-type phenol resins. One of the above kinds may be used alone, or two or more may be used in combination.

Among the phenol resins, a phenol novolac resin is preferable.

The content of the thermosetting resin (A) is preferably 1% by mass or more, and more preferably 5% by mass or more with respect to the total amount of the resin composition of the resin layer 50. Meanwhile, the content is preferably 30% by mass or less, and more preferably 20% by mass or less with respect to the total amount of the resin composition of the resin layer 50.

When the content of the thermosetting resin (A) is equal to or more than the above-described lower limit value, the overall handleability of the resin composition for the resin layer 50 is improved, formation of inner surface resin layers (the tooth inner surface resin layer 51 and the yoke inner surface resin layer 53) is facilitated, and the strength of the inner surface resin layers (the tooth inner surface resin layer 51 and the yoke inner surface resin layer 53) is improved.

When the content of the thermosetting resin (A) is equal to or less than the above-described upper limit value, the coefficient of linear expansion and the elastic modulus of the inner surface resin layers (the tooth inner surface resin layer 51 and the yoke inner surface resin layer 53) are further improved, and the thermal conductivity thereof is also further improved.

### [Filler (B)]

The filler (B) in the present embodiment is used from the viewpoint of improving thermal conductivity and obtaining strength of the resin layer 50 (more specifically, the inner surface resin layers (the tooth inner surface resin layer 51 and the yoke inner surface resin layer 53)).

As the filler (B), an inorganic filler is preferable, and a thermal conductive filler is particularly preferable. More specific examples of the filler (B) include silica, alumina, boron nitride, aluminum nitride, and silicon carbide from the viewpoint of balancing the thermal conductive properties with the electrical insulating properties. One of the above kinds may be used alone, or two or more may be used in combination. Among these, alumina or boron nitride is preferable as the filler (B).

The content of the filler (B), that is, the content of the filler is preferably 60% by mass or more with respect to the total amount of the resin composition.

### [Curing Agent (C)]

In a case where an epoxy resin or a phenol resin is used as the thermosetting resin (A) in the resin composition, the curing agent (C) is preferably further contained.

As the curing agent (C), one or more selected from a curing catalyst (C-1) and a phenol-based curing agent (C-2) can be used.

Examples of the curing catalyst (C-1) include organic metal salts such as zinc naphthenate, cobalt naphthenate, tin octylate, cobalt octylate, bisacetylacetonato cobalt (II), and trisacetylacetonato cobalt (III); tertiary amines such as triethylamine, tributylamine, and 1,4-diazabicyclo[2.2.2]octane; imidazoles such as 2-phenyl-4-methylimidazole, 2-ethyl-4-methylimidazole, 2,4-diethylimidazole, 2-phenyl-4-methyl-5-hydroxyimidazole, and 2-phenyl-4,5-dihydroxymethylimidazole; organic phosphorous compounds such as triphenylphosphine, tri-p-tolylphosphine, tetraphenylphosphonium·tetraphenylborate, triphenylphosphine·triphenylborane, and 1,2-bis-(diphenylphosphino)ethane; phenol compounds such as phenol, bisphenol A, and nonylphenol; organic acids such as an acetic acid, a benzoic acid, a salicylic acid, and a p-toluenesulfonic acid; and mixtures thereof. As the curing catalyst (C-1), one of the above kinds and derivatives thereof can be used alone, or two or more of the above kinds and derivatives thereof can be used in combination.

The content of the curing catalyst (C-1) is not particularly limited, but is preferably 0.001% by mass or more and 1% by mass or less with respect to the total amount of the resin composition.

In addition, examples of the phenol-based curing agent (C-2) include novolac-type phenol resins such as a phenol novolac resin, a cresol novolac resin, a trisphenol methane-type novolac resin, a naphthol novolac resin, and an aminotriazine novolac resin; modified phenol resins such as a terpene-modified phenol resin and a dicyclopentadiene-modified phenol resin; aralkyl-type resins such as a phenol aralkyl resin having a phenylene skeleton and/or a biphenylene skeleton and a naphthol aralkyl resin having a phenylene skeleton and/or a biphenylene skeleton; bisphenol compounds such as bisphenol A and bisphenol F; and resol-type phenol resins, and one of the above kinds may be used alone, or two or more may be used in combination.

Among these, novolac-type phenol resins or resol-type phenol resins are preferable as the phenol-based curing agent (C-2) from the viewpoint of improving the glass transition temperature and reducing the coefficient of linear expansion.

The content of the phenol-based curing agent (C-2) is not particularly limited, but is preferably 1% by mass or more, and more preferably 5% by mass or more with respect to the total amount of the resin composition. Meanwhile, the content is preferably 30% by mass or less, and more preferably 15% by mass or less with respect to the total amount of the resin composition.

### [Coupling Agent (D)]

The resin composition may contain a coupling agent (D). The coupling agent (D) can improve the wettability of the interface between the thermosetting resin (A) and the filler (B).

The coupling agent (D) is not particularly limited, but one or two or more coupling agents selected from, for example, an epoxy silane coupling agent, a cationic silane coupling agent, an aminosilane coupling agent, a titanate-based coupling agent, and a silicone oil-type coupling agent are preferably used.

The content of the coupling agent (D) is not particularly limited, but is preferably 0.05% by mass or more, and more preferably 0.1% by mass or more with respect to 100% by mass of the filler (B). Meanwhile, the content is preferably 3% by mass or less, and more preferably 2% by mass or less with respect to 100% by mass of the filler (B).

### [Phenoxy Resin (E)]

Furthermore, the resin composition may contain a phenoxy resin (E). In a case where the phenoxy resin (E) is contained, the flex resistance of the resin layer 50 can be improved. Moreover, the elastic modulus can be reduced, and the stress relaxation force of the resin layer 50 can be improved.

In addition, in a case where the phenoxy resin (E) is contained, the viscosity increases, and thus the flowability is reduced and the occurrence of voids and the like can be suppressed. In addition, in a case where the resin layer 50 is used in close contact with a metal member (that is, the tooth part 7 or the yoke part 6), the adhesion between the metal and the cured body of the resin composition can be improved.

Examples of the phenoxy resins (E) include phenoxy resins having a bisphenol skeleton phenoxy resins having a naphthalene skeleton, phenoxy resins having an anthracene skeleton, phenoxy resins having a biphenyl skeleton, and the like. In addition, it is also possible to use a phenoxy resin having a structure having a plurality of these skeletons.

The content of the phenoxy resin (E) is preferably, for example, 3% by mass or more and 10% by mass or less with respect to the total amount of the resin composition.

### [Wax (Release Agent)]

The resin composition contains a wax. Accordingly, releasability from the mold core 80 after molding can be increased. Examples of the wax include natural wax such as carnauba wax, synthetic wax such as montanic acid ester wax and oxidized polyethylene wax, higher fatty acids such as zinc stearate and metal salts thereof, paraffin, and higher fatty acid amides. These may be used alone or in combination of two or more thereof. It is preferable that the resin composition contains a higher fatty acid ester or a higher fatty acid amide, and it is particularly preferable that the resin composition contains a montan ester wax.

Examples of the hydrocarbon-based wax include a paraffin-based wax having 24 or more carbon atoms, an olefin-based wax having 26 or more carbon atoms, an alkylbenzene having 28 or more carbon atoms, and a microcrystalline wax.

Examples of the higher fatty acid include higher saturated fatty acids having 12 or more carbon atoms, such as lauric acid, myristic acid, palmitic acid, stearic acid, arachidic acid, behenic acid, cerotic acid, and montanic acid, and unsaturated fatty acids having 18 or more carbon atoms, such as oleic acid, linoleic acid, linolenic acid, elaidic acid, octadecenoic acid, arachidonic acid, gadoleic acid, erucic acid, and parinaric acid.

Examples of the wax obtained by inducing the higher fatty acid include a higher fatty acid ester, a higher fatty acid amide, and a higher fatty acid salt (metal soap).

The higher fatty acid ester is an ester of the above-described higher fatty acid and a monohydric or polyhydric alcohol. Examples of the monohydric alcohol include capryl alcohol, lauryl alcohol, myristyl alcohol, palmityl alcohol, stearyl alcohol, and behenyl alcohol, and examples of polyhydric alcohols include ethylene glycol, propylene glycol, butanediol, glycerin, pentaerythritol, and sorbitol.

Examples of the higher fatty acid ester include stearyl stearate, pentaerythritol tetrastearate, glyceryl monostearate, behenic acid monoglyceride, and montanic acid wax.

Examples of the higher fatty acid amide include saturated higher fatty acid amides such as lauric acid amide, palmitic acid amide, stearic acid amide, and behenic acid amide; unsaturated higher fatty acid amides such as erucic acid amide, oleic acid amide, brassidic acid amide, and elaidic acid amide; and higher fatty acid bisamides such as methylene bisstearic acid amide, ethylene bisstearic acid amide, and ethylene bisoleic acid amide (including saturated or unsaturated higher fatty acid alkylamides such as higher fatty acid methylamides and higher fatty acid ethylamides).

In a case where a wax (release agent) is used, the content thereof is preferably 0.01% to 3% by mass, and more preferably 0.05% to 2% by mass based on the entire resin molding material. Accordingly, the releasability improving effect can be reliably obtained. As a result, molding accuracy of the inner surface resin layer of the resin layer 50 (more specifically, the tooth inner surface resin layer 51 and the yoke inner surface resin layer 53) can be improved.

In a case where the wax (release agent) includes a higher fatty acid ester or a higher fatty acid amide, a contained amount of the higher fatty acid ester or the higher fatty acid amide is 1.0% by mass or less with respect to the total amount of the thermosetting resin composition. By mixing the higher fatty acid ester or the higher fatty acid amide as the wax (release agent) in an amount of 1.0% by mass or less with respect to the total amount of the thermosetting resin composition, it is possible to achieve both the withdrawal property of the mold core 80 (blade) and the adhesion to the stator core 41. The upper limit of the contained amount of the higher fatty acid ester or the higher fatty acid amide is preferably 0.8% by mass or less, and more preferably 0.6% by mass or less. The lower limit thereof is, for example, 0.1% by mass or more, preferably 0.2% by mass or more, and more preferably 0.3% by mass or more.

### [Other Components]

The resin composition may further contain an antioxidant, a leveling agent, and the like as long as the effects of the present invention are not impaired.

### <Resin Sealing Part>

The resin sealing part 65 is provided inside the slot 8 (more specifically, between the resin layer 50 and the coil 9) to seal the coil 9. The resin sealing part 65 may be provided by insert molding or may be provided as a separate component. As the resin material used for the resin sealing part 65, the material described as the resin material of the resin layer 50 can be used.

### <Method for Manufacturing Stator>

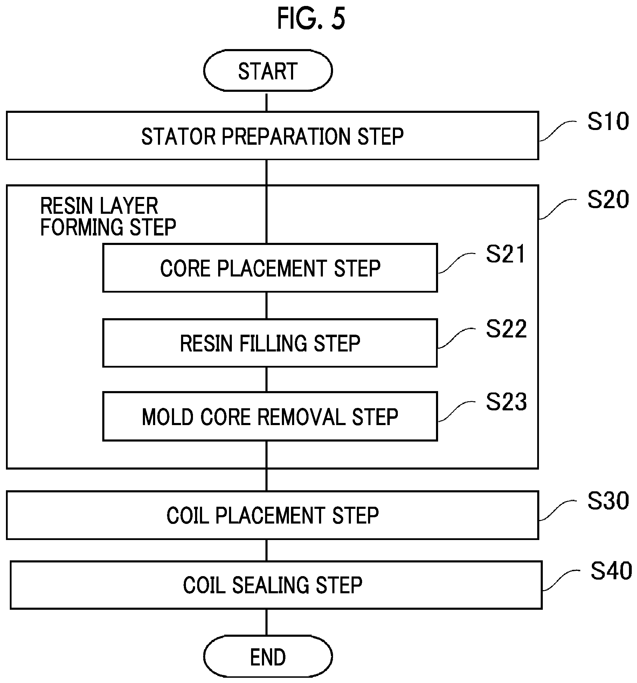

A method of producing the stator 4 of the present embodiment will be described. Fig. 5 is a flowchart showing a method for manufacturing the stator 4.

First, the stator 4 is prepared by laminating and tightly fixing a plurality of electromagnetic steel sheets in the axial direction (stator preparation step S10).

Next, the mold core 80 is disposed in the slot 8, and the resin layer 50 is formed by insert molding so as to integrally cover, with an insulating resin composition, the peripheral edge of the tooth part 7 (the inner wall surface 72, the upper surface 75a, and the lower surface 75b) and the inner wall surface 62 of the yoke part 6 around the circumference thereof (resin layer forming step S20). Details of the resin layer forming step S20 will be described later.

Next, the coils 9 are placed in the slots 8 where the resin layer 50 is provided (coil placement step S30). After all the coils 9 have been accommodated, the region on the inner peripheral side of the slot 8 is filled with a resin material to obtain the resin sealing part 65 (coil sealing step S40).

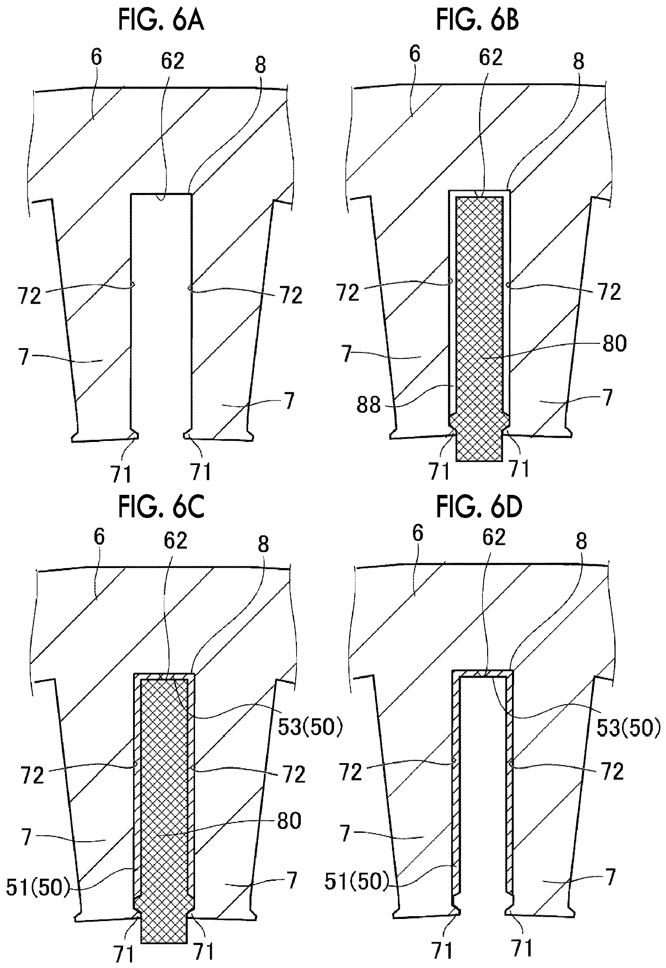

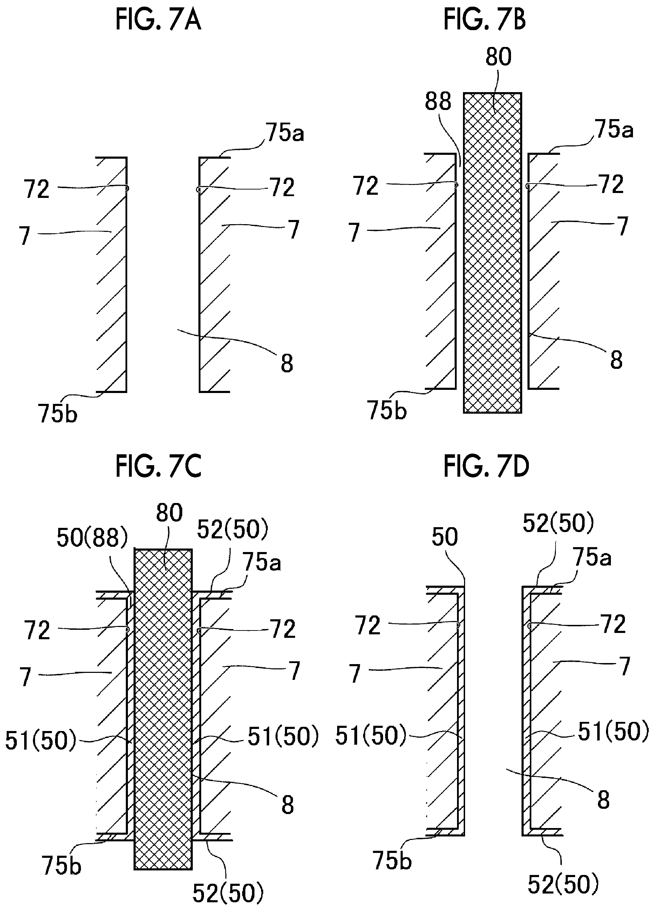

Next, the resin layer forming step S20 will be described in more detail with reference to the above-described flowchart, Fig. 6, and Fig. 7. Figs. 6 and 7 are views showing changes in the state inside the slot in the resin layer forming step S20, in which Fig. 6 is a cross-sectional view taken in a plane perpendicular to the axis, and Fig. 7 is a cross-sectional view of a portion corresponding to the section taken along a line A-A in Fig. 3.

The resin layer forming step S20 includes a core placement step S21, a resin filling step S22, and a mold core removal step S23.

As shown in Figs. 6A and 7A, the core placement step S21 is a step of inserting the blade-shaped mold core 80 into the slot 8. In the present embodiment, the mold core 80 is inserted into the slot 8 from the upper side in the drawing. At this time, the upper end and the lower end of the mold core 80 protrude from the upper end and the lower end of the slot 8.

In the core placement step S21, a space 88 to be filled with the thermosetting resin composition is formed between the wall surface (the inner wall surface 72 of the tooth part 7 and the inner wall surface 62 of the yoke part 6) of the slot 8 and the mold core 80.

Next, as shown in Figs. 6B and 7B, the resin filling step S22 is a step of filling the space 88 formed by the core placement step S21 with the above-described thermosetting resin composition.

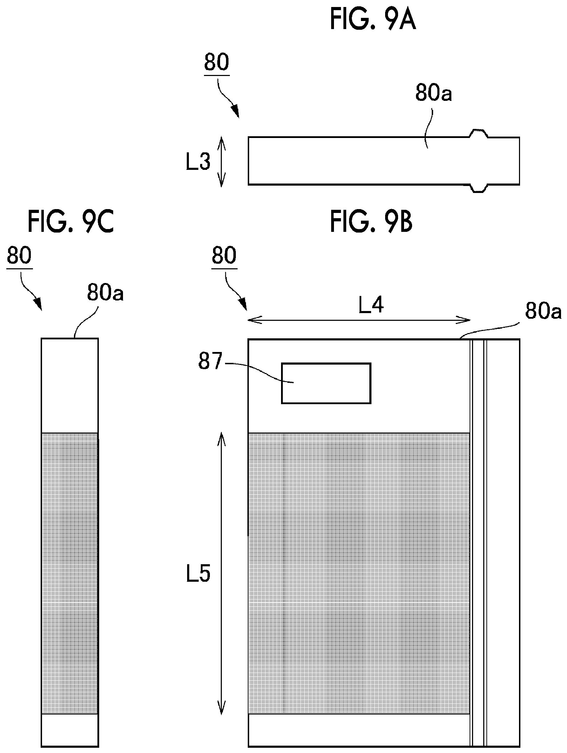

Next, as shown in Figs. 6C and 7C, the mold core removal step S23 is a step of pulling out and removing the mold core 80 in a step after the resin filling step S22. The step is performed in a so-called as-molded state in which after-curing is not performed. For example, as shown in the mold core 80 used in Examples described later in Fig. 9, an operating opening 87 is provided in the vicinity of an upper end 80a of the mold core 80. A predetermined jig is attached to the opening 87, and the mold core 80 is pulled out in the upward direction in the drawing.

When the mold core removal step S23 is completed, as shown in Figs. 6D and 7D, the resin layer 50 is formed on the wall surface (the inner wall surface 72 of the tooth part 7 and the inner wall surface 62 of the yoke part 6) of the slot 8.

### <Mold Core>

The mold core 80 used in the resin layer forming step S20 will be described.

The mold core 80 is formed in an appropriate shape according to the shape of the slot 8 and the resin layer 50 to be formed, but generally has a long and thin blade shape. As the mold core 80, a general steel material for a mold can be used, and for example, SKD-11 (JIS standard) can be used. A surface (surface in contact with the resin layer 50) of the mold core 80 is smoothed. In this manner, it is possible to avoid influence of distortion or the like on the resin layer 50 when the mold core 80 is pulled out.

Furthermore, a water contact angle of the surface of the mold core 80 is 90° or more, preferably 95° or more, and more preferably 100° or more. The upper limit of the water contact angle is 170° or less as a realistic value, preferably 160° or less, and more preferably 150° or less. The water contact angle is measured in accordance with JIS R 3257, and can be measured using, for example, a contact angle meter. As a measurement method, a known method such as a width-height method (θ/2 method), a Young-Laplace method, and an ellipse method can be used.

By containing, as the wax (release agent) contained in the material (thermosetting resin composition) of the resin layer 50, a higher fatty acid ester or a higher fatty acid amide such that the content thereof is 1.0% by mass or less, and by setting the water contact angle of the surface of the mold core 80 to fall within the above-described range, adhesion of the resin layer 50 to the stator core 41 can be ensured while improving the withdrawal property of the mold core 80.

In addition, a surface roughness Ra of the mold core 80 is 10 µm or less, preferably 5 µm or less, and more preferably 1 µm or less. The lower limit of the surface roughness Ra is not particularly limited, but is 0.01 µm or more as a realistic range, preferably 0.05 µm or more, and more preferably 0.1 µm or more.

The surface roughness Ra is measured in accordance with JIS B 0601-2001. By smoothing the surface of the mold core 80 such that the surface roughness Ra of the mold core 80 is within the above-described range, it is possible to ensure the adhesion of the resin layer 50 to the stator core 41 while improving the withdrawal property of the mold core 80.

It is sufficient that at least one of the water contact angle of the surface of the mold core 80 and the surface roughness Ra satisfies the above-described range; but by satisfying both conditions, it is possible to achieve both the withdrawal property of the mold core 80 and the adhesion of the resin layer 50 to the stator core 41.

The surface of the mold core 80 may have a coating layer.

As the coating layer, a chromium plating layer, a fluorine coating layer, a physical vapor deposition (PVD) coating layer, a ceramic coating layer, or the like can be used.

By providing the coating layer on the surface of the mold core 80 as described above, it is easy to adjust the water contact angle of the surface of the mold core 80 and the surface roughness Ra to be within the above-described ranges. The type and thickness of the coating layer are not limited to the above-described examples, and various coating layers capable of setting the water contact angle and the surface roughness to an appropriate range can be used.

In the mold core removal step S23, a withdrawal force F when removing the mold core 80 is 250 kgf or less, preferably 200 kgf or less, and more preferably 150 kgf or less. The lower limit thereof is, for example, 25 kgf or more, preferably 50 kgf or more, and more preferably 75 kgf or more.

In addition, in the mold core removal step S23, a ratio F/S1 of the withdrawal force F to a surface area S1 of the mold core 80 is 3.6 kgf/cm² or less, preferably 2.9 kgf/cm² or less, and more preferably 2.2 kgf/cm² or less. The lower limit thereof is, for example, 0.4 kgf/cm² or more, preferably 0.8 kgf or more, and more preferably 1.2 kgf or more. By setting the withdrawal force F of the mold core 80, the surface area S1, and the ratio F/S1 of the withdrawal force F to the surface area S1 to be within the above-described ranges, it is possible to suppress the force acting on the resin layer 50 during withdrawal of the mold core 80 and prevent defects such as distortion from occurring in the resin layer 50. These can be achieved by setting the material for the resin layer 50 (particularly the selection and contained amount of the wax) and the state of the surface of the mold core 80 (the water contact angle and the surface roughness Ra) as described above.

### <Summary of Embodiments>

The features of the present embodiment are summarized as follows.
<1> A thermosetting resin composition used for forming an insulating layer when filled into the space 88 formed between the mold core 80 (blade) inserted into an interior of the slot 8 of the stator 4, and the wall surface of the slot 8 (the inner wall surface 72 of the tooth part 7 and the inner wall surface 62 of the yoke part 6), the thermosetting resin composition containing:
   an epoxy resin;
   a curing agent;
   an inorganic filler; and
   a wax (release agent),
   in which the wax includes a higher fatty acid ester or a higher fatty acid amide, and a contained amount of the higher fatty acid ester or the higher fatty acid amide is 1.0% by mass or less with respect to the total amount of the thermosetting resin composition.
<2> A method for manufacturing the stator 4, in which an insulating layer (resin layer 50) is provided on the wall surface of the slot 8 (the inner wall surface 72 of the tooth part 7 and the inner wall surface 62 of the yoke part 6) by using the thermosetting resin composition according to <1>, the method including:
   the core placement step S21 of inserting the blade-shaped mold core 80 into an interior of the slot 8 and forming, between the wall surface of the slot 8 and the mold core 80, a filling space (space 88) to be filled with the thermosetting resin composition; and
   the resin filling step S22 of filling the filling space (space 88) with the thermosetting resin composition.
<3> The method for manufacturing the stator 4 according to <2>,
   in which a surface roughness Ra of the mold core 80 is 10 µm or less.
<4> The method for manufacturing a stator according to <2> or <3>,
   in which a surface of the mold core 80 has a coating layer.
<5> The method for manufacturing the stator 4 according to any one of <2> to <4>, further including, in a step after the resin filling step S22:
   the mold core removal step S23 of pulling out and removing the mold core 80.
<6> The method for manufacturing the stator 4 according to <5>,
   in which, in the mold core removal step S23, a withdrawal force F when removing the mold core 80 is 250 kgf or less.
<7> The method for manufacturing the stator 4 according to <6>,
   in which, in the mold core removal step S23, a ratio F/S1 of the withdrawal force F to a surface area S1 of the mold core 80 is 3.6 kgf/cm² or less.
<8> The method for manufacturing the stator 4 according to any one of <5> to <7>,
   in which the mold core removal step S23 is performed in an as-molded state.
<9> The method for manufacturing the stator 4 according to any one of <2> to <8>,
   in which a glass transition temperature Tg of a cured product of the thermosetting resin composition is 120°C or higher.

The embodiments of the present invention have been described above, but these are examples of the present invention and various configurations other than the above can be adopted.

### EXAMPLES

Hereinafter, the present invention will be described in detail with reference to Examples; however, the present invention is not intended to be limited to the description of these Examples. In the following examples, Evaluation 1 regarding the thermosetting resin composition (Examples 1 and Comparative Example 1) and Evaluation 2 regarding the mold core (Examples 2, 3, and 4) are described.

### <Evaluation 1>

In Evaluation 1, the thermosetting resin composition corresponding to the resin layer 50 of the embodiment is exemplified.

Raw material components used in Example 1 and Comparative Example 1 are shown below.

### (Inorganic filler)

· Inorganic filler 1: fused spherical alumina (manufactured by Micron, Ltd., average particle diameter: 20 µm)
· Inorganic filler 2: fused spherical silica (manufactured by Tokuyama Corporation, average particle diameter: 0.2 µm)
· Inorganic filler 3: fused spherical alumina (manufactured by Admatechs Co., Ltd., average particle diameter: 0.6 µm)

### (Colorant)

· Colorant 1: Carbon black

### (Coupling Agent)

· Coupling agent 1: N-phenyl-3-aminopropyltrimethoxysilane
· Coupling agent 2: 3-mercaptopropyltrimethoxysilane

### (Epoxy resin)

· Epoxy resin 1: biphenyl-type epoxy resin (manufactured by Mitsubishi Chemical Corporation, YX4000HK)
· Epoxy resin 2: triphenolmethane-type phenol resin (manufactured by Mitsubishi Chemical Corporation, YL6677)

### (Curing Agent)

· Curing agent 1: novolac-type phenol compound (manufactured by Sumitomo Bakelite Co., Ltd.)

### (Curing Accelerator)

· Curing accelerator 1: tetraphenylphosphonium 4,4'-sulfonyldiphenolate
· Curing accelerator 2: tetraphenylphosphonium bis(naphthalene-2,3-dioxy)phenylsilicate

### (Wax (Release Agent))

· Wax 1: Carnauba wax (manufactured by AIR WATER INC)
· Wax 2: montanic acid derivative (manufactured by Clariant Japan K.K., LICO WAX E)
· Wax 3: diethanolamine dimontanate ester

### (Ion Supplementing Agent)

· Ion supplementing agent 1: hydrotalcite (manufactured by Kyowa Chemical Industry Co., Ltd.)

### (Other Additives)

· Triazole compound 1: triazole compound (manufactured by Shikoku Chemicals Corporation)

### (Low-stress Material)

· Silicone resin: silicone oil (manufactured by Shin-Etsu Chemical Co., Ltd., KR-480)
· Silicone resin: epoxy-polyether-modified silicone oil (manufactured by Dow Corning Toray Co., Ltd., FZ-3730)

### (Preparation of Resin Composition)

First, each raw material blended according to Table 1 was mixed at normal temperature using a mixer, and then kneaded at 70°C or higher and 110°C or lower. Next, the obtained kneaded product was cooled, and then this was pulverized to obtain a resin composition.

The following measurements were made on the resin composition obtained in each example. The measurement results are shown together in Table 1.

### (Glass Transition Temperature Tg)

For each example, the glass transition temperature of a cured product of the obtained resin composition was measured as follows. First, the sealing resin composition was injection-molded using a transfer molding machine at a mold temperature of 175°C and an injection pressure of 9.8 MPa for a curing time of 5 minutes, and a test piece having a size of 15 mm × 3 mm × 4 mm was obtained. Next, measurement was performed using a thermomechanical analyzer (manufactured by Seiko Instruments, Inc., TMA100) under the conditions of a measurement temperature range of 40°C to 300°C and a rate of temperature increase of 5 °C/min. From the measurement result, a glass transition temperature was calculated.

### (Thermal Conductivity)

For the resin composition obtained in each example, the resin composition was injection-molded using a transfer molding machine at a mold temperature of 175°C and an injection pressure of 9.8 MPa for a curing time of 3 minutes, and a cured body having a size of 10 mm × 10 mm × 1 mm was obtained.

The thermal conductivity of the obtained cured product was calculated using the following equation, from the thermal diffusion coefficient (α) measured by a laser flash method (half-time method), the specific heat (Cp) measured by a DSC method, and the density (ρ) measured according to JIS K 6911. The unit of the thermal conductivity is W/m·K. 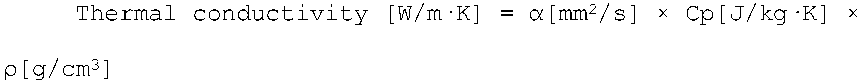 Thermal conductivity [W/m·K] = α[mm2/s] × Cp[J/kg·K] × ρ[g/cm3]

**[Table 1]**

| <Formulation of resin composition> | | Comparative Example 1 | Example 1 |
|---|---|---|---|
| Inorganic filler | Inorganic filler 1 | 79.850 | 80.060 |
| | Inorganic filler 2 | 0.500 | 0.500 |
| | Inorganic filler 3 | 10.000 | 10.000 |
| Colorant | Colorant 1 | 0.300 | 0.200 |
| Coupling agent | Coupling agent 1 | 0.100 | 0.100 |
| | Coupling agent 2 | 0.100 | 0.100 |
| Epoxy resin | Epoxy resin 1 | 2.350 | 2.540 |
| | Epoxy resin 2 | 2.350 | 2.540 |
| Curing agent | Curing agent 1 | 2.570 | 2.303 |
| Curing accelerator | Curing accelerator 1 | 0.050 | 0.040 |
| | Curing accelerator 2 | 0.150 | 0.137 |
| Wax | Wax 1 | 0.100 | 0.200 |
| | Wax 2 | 0.100 | - |
| | Wax 3 | - | 0.300 |
| Ion supplementing agent | Ion supplementing agent 1 | 0.150 | 0.150 |
| Other additives | Triazole compound 1 | 0.030 | 0.030 |
| Low-stress material | Low-stress material 1 | 1.000 | 0.500 |
| | Low-stress material 2 | 0.300 | 0.300 |
| TOTAL | | 100.00 | 100.00 |
| <Measurement result of resin composition> | | | |
| Glass transition temperature Tg (°C) | | 180 | 175 |
| Thermal conductivity (W/mK) | | 5.0 | 5.0 |

| | | | |
|---|---|---|---|
| unit: % by mass | | | |

### <Evaluation 2>

In Evaluation 2, three mold cores (blades) were prepared for the mold core 80 (blade) of the embodiment, and the following evaluation items were evaluated. As the evaluation items, the surface roughness Ra, the withdrawal force F, and the withdrawal force F/surface area S were measured. The evaluation results are shown in Table 2.

### (Stator Simulation Mold)

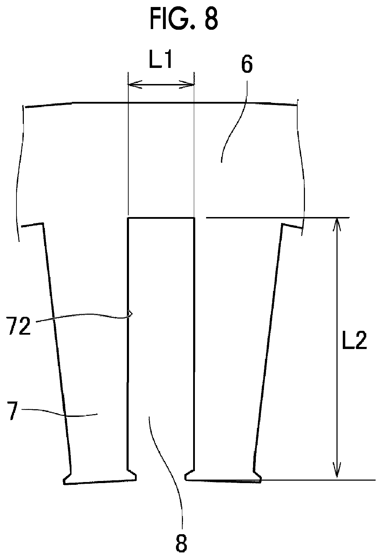

Fig. 8 shows a shape of a slot in a stator simulation mold used for measuring the withdrawal force F and the withdrawal force F/surface area S. Here, one slot is shown.
Each dimension of the slot was as follows.
Slot width (L1): 4.5 mm
Slot length (L2): 24.3 mm
Slot height: 150 mm

### (Mold Core (Blade))

Fig. 9 shows a shape of the mold core 80 (blade) used. Fig. 9A is a plan view, Fig. 9B is a side view, and Fig. 9C is a front view. A black portion in the drawing is a region of the blade pressure-receiving area (surface area S).

Each dimension corresponding to the blade pressure-receiving area of the mold core 80 (blade) was as follows.
Blade pressure-receiving width (L3): 3.9 mm
Blade pressure-receiving length (L4): 20.5 mm
Blade pressure-receiving height (L5): 156 mm

The mold cores 80 of Examples 3 to 5 had the same shape, but different surface conditions.

### <Surface Roughness Ra>

The surface roughness Ra of the mold core 80 was measured using a measuring device (manufactured by KEYENCE CORPORATION) in accordance with JIS B 0601-2001.

### (Withdrawal Force F and Withdrawal Force F/Surface Area S)

The stator simulation mold and the mold core 80 described above were prepared, the mold core 80 was inserted into three slots 8, and then encapsulated with a sealing resin. After the encapsulation, hydraulic stripping was performed in the as-molded state, and the withdrawal force was measured with a pressure measuring machine.

A temperature at the time of withdrawing was 80°C, and the blade pressure-receiving area (surface area S) was 70 cm².

**[Table 2]**

| | Example 2 | Example 3 | Example 4 |
|---|---|---|---|
| Withdrawal pressure (Mpa) | 19 | 13 | 6 |
| Withdrawal force (3 pieces) (kgf) | 1443 | 988 | 456 |
| Withdrawal force F (1 piece) (kgf) | 481 | 329 | 152 |
| Withdrawal force F/surface area S (kgf/cm²) | 6.9 | 4.7 | 2.1 |
| Surface roughness Ra (µm) | 1.1 | 1.1 | 0.47 |

This application claims priority based on Japanese Patent Application No. 2023-203627 filed on December 1, 2023, the entire disclosure of which is incorporated herein by reference.

### REFERENCE SIGNS LIST

100 motor
1 case
2 rotor
4 stator
5 permanent magnet
6 yoke part
7 tooth part
8 slot
9 coil
21 coil holding part
41 stator core
50 resin layer
51 tooth inner surface resin layer
52 tooth outer surface resin layer
53 yoke inner surface resin layer
62, 72 inner wall surface
65 resin sealing part
80 mold core (blade)

## Claims

1. A thermosetting resin composition used for forming an insulating layer when filled into a space formed between a blade that is a mold core inserted into an interior of a slot of a stator, and a wall surface of the slot, the thermosetting resin composition comprising:
an epoxy resin;
a curing agent;
an inorganic filler; and
a wax,
wherein the wax includes a higher fatty acid ester or a higher fatty acid amide, and a contained amount of the higher fatty acid ester or the higher fatty acid amide is 1.0% by mass or less with respect to a total amount of the thermosetting resin composition.

2. A method for manufacturing a stator, in which an insulating layer is provided on a wall surface of a slot by using the thermosetting resin composition according to Claim 1, the method comprising:
a core placement step of inserting a blade-shaped mold core into an interior of the slot and forming, between the wall surface of the slot and the mold core, a filling space to be filled with the thermosetting resin composition; and
a resin filling step of filling the filling space with the thermosetting resin composition.

3. The method for manufacturing a stator according to Claim 2,
wherein a surface roughness Ra of the mold core is 10 µm or less.

4. The method for manufacturing a stator according to Claim 2 or 3,
wherein a surface of the mold core has a coating layer.

5. The method for manufacturing a stator according to Claim 2 or 3, further comprising, in a step after the resin filling step:
a mold core removal step of pulling out and removing the mold core.

6. The method for manufacturing a stator according to Claim 5,
wherein, in the mold core removal step, a withdrawal force F when removing the mold core is 250 kgf or less.

7. The method for manufacturing a stator according to Claim 6,
wherein, in the mold core removal step, a ratio F/S of the withdrawal force F to a surface area S of the mold core is 3.6 kgf/cm² or less.

8. The method for manufacturing a stator according to Claim 5,
wherein the mold core removal step is performed in an as-molded state.

9. The method for manufacturing a stator according to Claim 2 or 3,
wherein a glass transition temperature Tg of a cured product of the thermosetting resin composition is 120°C or higher.
